# EUROPÄISCHE PATENTANMELDUNG

(11) **EP 4 600 073 A1**
(43) Veröffentlichungstag der Anmeldung: **13.08.2025**
(21) Anmeldenummer: 24156052.3
(22) Anmeldetag: 06.02.2024
(51) Int. Cl.: B60L 5/24, B60L 5/36, B60L 5/42, B60L 53/10, B60L 53/16

(54) **SCHNELLLADESYSTEM UND VERFAHREN ZUR ELEKTRISCHEN VERBINDUNG EINES FAHRZEUGS MIT EINER LADESTATION**

(71) Anmelder: Schunk Transit Systems GmbH, 35435 Wettenberg (DE)
(72) Erfinder: DREWES, Nils, 35398 Gießen (DE); HOFMANN, Dennis, 35390 Gießen (DE); DOMES, Matthias, 61231 Bad Nauheim (DE); STAUBACH, Timo, 36358 Herbstein (DE)
(74) Vertreter: advotec.

(57) **Zusammenfassung**

Die Erfindung betrifft ein Schnellladesystem (46) für elektrisch angetriebene Fahrzeuge, insbesondere Elektrobusse oder dergleichen sowie ein Verfahren zur Ausbildung einer elektrisch leitenden Verbindung zwischen einem Fahrzeug und einer stationären Ladestation, mit einer Kontaktvorrichtung (47) einer Ladekontaktvorrichtung (43) und einer Positioniervorrichtung, wobei die Kontaktvorrichtung oder die Ladekontaktvorrichtung an einem Fahrzeug anordbar ist, wobei die Kontaktvorrichtung mit der Ladekontaktvorrichtung in einer Kontaktposition elektrisch kontaktierbar ist, wobei mittels der Positioniervorrichtung die Kontaktvorrichtung relativ zur Ladekontaktvorrichtung positionierbar und in die Kontaktposition bringbar ist, wobei die Ladekontaktvorrichtung einen Ladekontaktelementträger (44) mit Ladekontaktelementen (45) aufweist, wobei die Ladekontaktelemente jeweils streifenförmig ausgebildet sind, wobei die Kontaktvorrichtung einen Kontaktelementträger (48) mit Kontaktelementen (49) aufweist, wobei die Kontaktelemente in der Kontaktposition mit den Ladekontaktelementen jeweils zur Ausbildung von Kontaktpaarungen elektrisch kontaktierbar sind, wobei die Kontaktpaarungen für zumindest zwei Leistungskontakte des Schnellladesystems ausbildbar sind, wobei der Ladekontaktelementträger zumindest vier Ladekontaktelemente (45) und/oder wobei der Kontaktelementträger zumindest vier Kontaktelemente (49) aufweist, wobei die Ladekontaktelemente relativ zu den Kontaktelementen derart angeordnet sind, dass in der Kontaktposition zumindest zwei Leistungskontakte zwischen zwei Ladekontaktelementen und zwei Kontaktelementen ausbildbar sind.

## Beschreibung

Die Erfindung betrifft ein Schnelladesystem für elektrisch angetriebene Fahrzeuge, insbesondere Elektrobusse oder dergleichen, und ein Verfahren zur Ausbildung einer elektrisch leitenden Verbindung zwischen einem Fahrzeug und einer stationären Ladestation mit einer Kontaktvorrichtung, einer Ladekontaktvorrichtung und einer Positioniervorrichtung, wobei die Kontaktvorrichtung oder die Ladekontaktvorrichtung an einem Fahrzeug anordbar ist, wobei mit der Kontaktvorrichtung die Ladekontaktvorrichtung in einer Kontaktposition elektrisch kontaktierbar ist, wobei mittels der Positioniervorrichtung die Kontaktvorrichtung relativ zur Ladekontaktvorrichtung positionierbar und in die Kontaktposition bringbar ist, wobei die Ladekontaktvorrichtung einen Ladekontaktelementträger mit Ladekontaktelementen aufweist, wobei die Ladekontaktelemente jeweils streifenförmig ausgebildet sind, wobei die Kontaktvorrichtung einen Kontaktelementträger mit Kontaktelementen aufweist, wobei die Kontaktelemente in der Kontaktposition mit dem Ladekontaktelement jeweils zur Ausbildung von Kontaktpaarungen elektrisch kontaktierbar sind, wobei die Kontaktpaarungen für zumindest zwei Leistungskontakte des Schnellladesystems ausbildbar sind.

Derartige Schnellladesysteme beziehungsweise Verfahren sind bereits aus dem Stand der Technik bekannt und werden regelmäßig zur Schnellladung elektrisch angetriebener Fahrzeuge an einer Haltestelle beziehungsweise einem Haltepunkt eingesetzt. Im Nahverkehr eingesetzte elektrisch angetriebene Fahrzeuge, wie beispielsweise Busse, können an den jeweiligen Haltestellen so sukzessive mit elektrischer Energie versorgt werden.

Bei einem aus der WO 2019/175165 A1 bekannten Schnellladesystem wird eine dachförmige Ladekontaktvorrichtung von einer übereinstimmend ausgebildeten Kontaktvorrichtung kontaktiert. Die Ladekontaktvorrichtung weist dabei Ladekontaktelemente auf, die in Art von Leiterstreifen ausgebildet und in einer Fahrtrichtung des Fahrzeugs verlaufend angeordnet sind. Kontaktelemente der Kontaktvorrichtung sind in Art von Bolzen ausgebildet und kontaktieren in der Kontaktposition die Leiterstreifen punktuell. Ein zielgenaues Erreichen der Kontaktposition wird dadurch möglich, dass die Kontaktvorrichtung in die Ladekontaktvorrichtung in einer vertikalen Richtung, relativ bezogen quer zu einer Fahrtrichtung des Fahrzeugs eingeführt wird.

Bei dem aus dem Stand der Technik bekannten Ladesystemen ist nachteilig, dass ein Laden eines Fahrzeugs vergleichsweise lange dauert und bei längeren Ladezeiten Bauteile an der Ladekontaktvorrichtung oder der Kontaktvorrichtung der in Folge eines Ladevorgangs derart erwärmt werden, dass für diese Bauteile zulässige Temperaturgrenzwerte überschritten werden können. Weiter sind bereits eine Reihe von Schnellladesystemen in Betrieb und damit Teil einer Ladeinfrastruktur, beispielsweise im öffentlichen Nahverkehr. Es sind bereits Ladestationen, beispielsweise an Haltestellen, vorhanden und Fahrzeuge beziehungsweise Busse mit entsprechenden Kontaktvorrichtungen ausgestattet. Eine Umstellung dieser Ladestationen und Fahrzeuge auf ein neues, verbessertes Schnellladesystem ist aufgrund der hohen Investitionskosten jedoch nicht ohne weiteres möglich. So müssen prinzipiell sämtliche Ladestationen und Kontaktvorrichtungen an Fahrzeugen erneuert werden, wenn beispielsweise eine Linie im öffentlichen Nahverkehr mit einem verbesserten Schnellladesystem betrieben werden soll.

Der vorliegenden Erfindung liegt daher die Aufgabe zugrunde, ein Schnellladesystem und ein Verfahren zur Ausbildung einer elektrisch leitenden Verbindung zwischen einem Fahrzeug und einer Ladestation vorzuschlagen, welches einen kostengünstigen Betrieb des Verkehrsmittels und einen schnellen und sicheren Ladevorgang ermöglicht.

Diese Aufgabe wird durch ein Schnellladesystem mit den Merkmalen des Anspruchs 1, eine Ladeinfrastruktur mit den Merkmalen des Anspruchs 16 und ein Verfahren mit den Merkmalen des Anspruchs 17 gelöst.

Das erfindungsgemäße Schnellladesystem für elektrisch angetriebene Fahrzeuge, insbesondere Elektrobusse oder dergleichen, zur Ausbildung einer elektrisch leitenden Verbindung zwischen einem Fahrzeug und einer stationären Ladestation, umfasst eine Kontaktvorrichtung, eine Ladekontaktvorrichtung und eine Positioniervorrichtung, wobei die Kontaktvorrichtung oder die Ladekontaktvorrichtung an einem Fahrzeug anordbar ist, wobei mit der Kontaktvorrichtung die Ladekontaktvorrichtung in einer Kontaktposition elektrisch kontaktierbar ist, wobei mittels der Positioniervorrichtung die Kontaktvorrichtung relativ zur Ladekontaktvorrichtung positionierbar und in die Kontaktposition bringbar ist, wobei die Ladekontaktvorrichtung einen Ladekontaktelementträger mit Ladekontaktelementen aufweist, wobei die Ladekontaktelemente jeweils streifenförmig ausgebildet sind, wobei die Kontaktvorrichtung einen Kontaktelementträger mit Kontaktelementen aufweist, wobei die Kontaktelemente in der Kontaktposition mit den Ladekontaktelementen jeweils zur Ausbildung von Kontaktpaarungen elektrisch kontaktierbar sind, wobei die Kontaktpaarungen für zumindest zwei Leistungskontakte des Schnellladesystems ausbildbar sind, wobei der Ladekontaktelementträger zumindest vier Ladekontaktelemente und/oder wobei der Kontaktelementträger zumindest vier Kontaktelemente aufweist, wobei die Ladekontaktelemente relativ zu den Kontaktelementen derart angeordnet sind, dass in der Kontaktposition zumindest zwei Leistungskontakte zwischen zwei Ladekontaktelementen und zwei Kontaktelementen ausbildbar sind.

Erfindungsgemäß ist demnach vorgesehen, dass der Ladekontaktelementträger zumindest vier Ladekontaktelemente zur Ausbildung von zumindest zwei Leistungskontakten mit zumindest zwei Kontaktelementen aufweist, wobei alternativ oder ergänzend, der Kontaktelementträger zumindest vier Kontaktelemente zur Ausbildung von zumindest zwei Leistungskontakten mit zumindest zwei Ladekontaktelementen aufweist. Ein Laden eines Fahrzeugs kann dann, beispielsweise mit Gleichstrom, über zumindest zwei Kontaktpaarungen beziehungsweise Pole, beispielsweise für Plus und Minus, erfolgen. Gleichwohl sind zumindest vier Ladekontaktelemente und/oder vier Kontaktelemente vorgesehen, so dass auch eine Stromübertragung über vier Leistungskontakte beziehungsweise vier Pole, beispielsweise zwei Pole für Plus und zwei Pole für Minus, erfolgen kann. In diesem Fall kann dann prinzipiell doppelt so viel Strom übertragen werden, wie mit nur zwei Leistungskontakten beziehungsweise Polen. Auch kann, je nach gewünschter Ladedauer des Fahrzeugs, dieses vergleichsweise lange geladen werden, ohne dass es zu einer unzuträglichen Erwärmung von Bauteilen der Ladekontaktvorrichtung und/oder der Kontaktvorrichtung kommt. Eine Stromtragfähigkeit des Schnellladesystems kann somit beim Laden mit hohen Strömen innerhalb kurzer Zeit und auch bei vergleichsweise längerer Ladezeit wesentlich verbessert werden.

Darüber hinaus ist es durch die zumindest vier Ladekontaktelemente beziehungsweise vier Kontaktelemente möglich, auch Ladekontaktvorrichtungen beziehungsweise Ladestationen mit einer geringeren Anzahl an Ladekontaktelementen beziehungsweise Kontaktelementen mit Fahrzeugen zu verbinden. In diesem Fall umfasst das Schnellladesystem dann beispielsweise eine aus dem Stand der Technik bekannte Kontaktvorrichtung mit zwei Kontaktelementen zur Ausbildung von Leistungskontakten und eine Ladekontaktvorrichtung mit vier Ladekontaktelementen. Dabei sind dann nur zwei der Ladekontaktelemente mit den Kontaktelementen kontaktierbar, wobei die übrigen zwei Ladekontaktelemente der Ladekontaktvorrichtung ungenutzt bleiben. Umgekehrt kann die Ladekontaktvorrichtung zwei Ladekontaktelemente aufweisen und die Kontaktvorrichtung vier Kontaktelemente, wovon lediglich zwei Kontaktelemente mit den Ladekontaktelementen kontaktierbar sind und die übrigen zwei Kontaktelemente der Kontaktvorrichtung ungenutzt bleiben. In beiden Fällen sind die Ladekontaktvorrichtungen und die Kontaktvorrichtungen jeweils soweit miteinander kompatibel, dass ein reguläres Laden des Fahrzeugs durchgeführt werden kann. Es bedarf dann auch nicht einer vollständigen Erneuerung einer Ladeinfrastruktur beziehungsweise von Schnellladesystemen. Eine Umstellung einer Ladeinfrastruktur kann dann auch sukzessive erfolgen, da ältere Ladekontaktvorrichtungen beziehungsweise Kontaktvorrichtungen mit erfindungsgemäßen Ladekontaktvorrichtungen beziehungsweise Kontaktvorrichtungen zur Ausbildung von zumindest zwei Leistungskontakten genutzt werden können. Hierdurch ist es auch möglich zunächst hohe Investitionskosten zu vermeiden und gleichzeitig ein Laden von Fahrzeugen schnell und sicher durchzuführen.

In einer besonders einfachen Ausführungsform des Schnellladesystems können zwei Leistungskontakte mit alleine zwei Kontaktelementen ausbildbar sein. Dann kann entweder die Ladekontaktvorrichtung vier Ladekontaktelemente und die Kontaktvorrichtung zwei Kontaktelemente oder die Ladekontaktvorrichtung zwei Ladekontaktelemente und die Kontaktvorrichtung vier Kontaktelemente aufweisen. Die Ladekontaktelemente und die Kontaktelemente werden relativ zueinander so angeordnet, dass in der Kontaktposition alleine die zwei Leistungskontakte ausgebildet werden. Die übrigen Ladekontaktelemente beziehungsweise Kontaktelemente bleiben ungenutzt. So kann in der Kontaktposition eine Ausbildung von zumindest zwei weiteren Leistungskontakten oder eine Kontaktierung von zumindest zwei Kontaktelementen unterbleiben. Die eventuell überschüssig vorhandenen Ladekontaktelemente beziehungsweise Kontaktelemente gelangen dann nicht mit weiteren Kontaktelementen beziehungsweise Ladekontaktelementen zur Ausbildung von weiteren Leistungskontakten so in Kontakt, dass ein Strom beziehungsweise Ladestrom übertragen werden könnte.

In einer weiteren Ausführungsform können in der Kontaktposition zumindest vier Leistungskontakte zwischen vier Ladekontaktelementen und vier Kontaktelementen ausbildbar sein. So können dann vergleichsweise hohe Ströme übertragen werden, wodurch sich eine Ladedauer verkürzen kann. Weiter kann auch eine Ladedauer, je nach Bedarf, verlängert werden, ohne dass es zu einer unzuträglichen Erwärmung von Bauteilen der Ladekontaktvorrichtung beziehungsweise der Kontaktvorrichtung kommen kann. Bei einem Laden des Fahrzeugs mit Gleichstrom können dann zwei der Leistungskontakte für einen Pluspol und zwei der Leistungskontakte für einen Minuspol genutzt werden. Durch das Aufteilen der Mehrzahl von Polen auf die zumindest vier Leistungskontakte ergibt sich eine getrennte Stromführung für die jeweiligen Pole. Auch hierdurch kann einer schnelle Überhitzung von Bauteilen, insbesondere der Ladekontaktelemente und der Kontaktelemente, vorgebeugt werden, da Bereiche an dem Ladekontaktelementträger und dem Kontaktelementträger, an denen Wärme bei einer Stromübertragung entstehen könnte, in einem Abstand von aneinander getrennt sind. Hierdurch ergibt sich eine bessere Wärmeverteilung am Ladekontaktelementträger beziehungsweise Kontaktelementträger, wodurch eine Entstehung von überhitzten Bereichen beziehungsweise Punkten vermieden werden kann.

Der Kontaktelementträger kann mehr als vier Kontaktelemente aufweisen, wobei zumindest zwei Kontaktelemente entlang zumindest eines Ladekontaktelements mit diesen kontaktiert werden können. Folglich kann vorgesehen sein, dass je Ladekontaktelement zwei oder mehr Kontaktelemente mit einem Ladekontaktelement verbunden beziehungsweise kontaktiert werden. Die Kontaktelemente können dann in einer Reihenanordnung an dem Ladekontaktelement angeordnet sein.

Die Ladekontaktelemente können als Leiterstreifen ausgebildet sein, wobei die Leiterstreifen relativ zueinander parallel und in Richtung einer Längsachse des Ladekontaktelementträgers beziehungsweise eines Fahrzeugs angeordnet sein können. Insbesondere können die Leiterstreifen dann in der Längsrichtung beziehungsweise in einer horizontalen Richtung, welche im Wesentlichen einer Fahrtrichtung des Fahrzeugs entspricht, angeordnet sein. Beispielsweise können die Leiterstreifen über 1 m lang sein, so dass ein Fahrzeug innerhalb eines Bereichs an einer Haltestelle anhalten kann. So können die Ladekontaktelemente eine vergleichsweise große, kontaktierbare Fläche für die Kontaktelemente ausbilden. Auch ist ein Leiterstreifen dann einfach herzustellen, beispielsweise durch die Verwendung eines Halbzeugs als Leiterstreifen. Die Leiterstreifen können beispielsweise aus Kuper oder Aluminium bestehen. Weiter können die Leiterstreifen in einem Abstand relativ zueinander so angeordnet sein, dass zwei Leiterstreifen nicht durch ein einzelnes Kontaktelement elektrisch miteinander verbunden werden können. Weiter kann dieser Abstand so gewählt werden, dass es nicht zu einem Spannungsüberschlag beziehungsweise Lichtbogen zwischen den Leiterstreifen kommen kann. Vorzugsweise sind Leiterstreifen eines Pols beziehungsweise einer Phase benachbart angeordnet.

Die Kontaktelemente können in zumindest einer Ebene angeordnet sein, die in der Kontaktposition orthogonal zu einer Längsachse des Ladekontaktelementträgers verlaufen kann. Damit ist dann sichergestellt, dass die Kontaktelemente in der Längsrichtung beziehungsweise Fahrtrichtung gleichzeitig in den Ladekontaktelementträger eingeführt oder herausbewegt werden können. Ein von der orthogonalen Anordnung der Ebene abweichender Versatz kann sich bei einem Positionierungsfehler des Fahrzeugs an der Haltestelle ergeben, wobei dann vorgesehen sein kann, dass anhand der Gestalt der Kontaktvorrichtung und der Ladekontaktvorrichtung eine Erzielung der Kontaktposition nicht möglich oder nur innerhalb einer geringen Winkeltoleranz möglich ist.

Die Kontaktelemente können in zumindest einer weiteren Ebene angeordnet sein, die in der Kontaktposition orthogonal zu der Längsachse verläuft, wobei die Ebenen dann in Richtung der Längsachse voneinander beabstandet sein können. In der Ebene und in der weiteren Ebene können so jeweils Kontaktelemente zur Ausbildung von Leistungskontakten angeordnet sein. Demnach kann vorgesehen sein die Kontaktelemente in Richtung der Längsachse beziehungsweise einer Fahrtrichtung des Fahrzeugs an dem Kontaktelementträger derart relativ zueinander versetzt anzuordnen.

So können die Kontaktpaarungen für jeweils Leistungskontakte, einen Signalkontakt und einen Schutzkontakt des Schnellladesystems ausbildbar sein. Dabei muss es sich um zumindest zwei Kontaktpaarungen von Leistungskontakten handeln, damit ein Ladestrom zwischen der Kontaktvorrichtung und der Ladekontaktvorrichtung übertragen werden kann. Der Ladestrom kann ein Gleichstrom oder ein Wechselstrom sein. Auch können weitere Kontaktpaarungen zur Übertragung des Ladestroms vorgesehen sein, um über die jeweiligen Kontaktflächen hohe Ströme in kurzer Zeit übertragen zu können. Weiter wird über eine größere Anzahl von Kontaktpaarungen sichergestellt, dass selbst im Falle einer Unterbrechung einer einzelnen Kontaktpaarung dennoch ein Ladestrom fließen kann. Der Schutzkontakt kann dazu dienen, dass das Fahrzeug mit Masse beziehungsweise einem Nullpotential zu verbinden. Der Signalkontakt kann dazu dienen, Signale und Daten zwischen dem Fahrzeug und dem Schnellladesystem beziehungsweise einer Ladestation auszutauschen. Insbesondere kann vorgesehen sein, dass erst ein Strom über die Kontaktpaarungen der Leistungskontakte fließt, wenn die Kontaktpaarung für den Signalkontakt und den Schutzkontakt ausgebildet wurde. Umgekehrt kann ein über die Kontaktpaarungen der Leistungskontakte fließender Ladestrom unmittelbar abgeschaltet werden, wenn der Signalkontakt und/oder der Schutzkontakt unterbrochen wird. Somit kann dann sichergestellt werden, dass eine unbeabsichtigte Verschiebung eines Kontaktelements an einer Ladekontaktfläche zunächst zu einer Trennung des Signalkontaktes führt, bevor eine Kontaktpaarung eines Leistungskontaktes getrennt wird. Dies stellt sicher, dass der Leistungskontakt dann immer stromlos ist, wenn der Signalkontakt und/oder der Schutzkontakt getrennt ist.

Die Kontaktelemente können jeweils eine Kontaktfläche und die Ladekontaktelemente können jeweils eine Ladekontaktfläche ausbilden, wobei die Kontaktflächen jeweils kleiner als die Ladekontaktflächen ausgebildet sein können. Beispielsweise können die Kontaktelemente bolzenförmig oder in Art einer Wippe oder eines Arms ausgebildet sein. Weiter können die Kontaktelemente am Kontaktelementträger federnd gelagert sein. Die Kontaktelemente sind so besonders einfach herstellbar, wobei die federnde Lagerung durch eine einfache Druckfeder innerhalb oder an dem Kontaktelement ausgeführt werden kann. Infolge dessen kann so ein punktueller Kontakt mit einem Ladekontaktelement unter einer Federvorspannung ausgebildet werden. Folglich kann die Kontaktfläche auch punktförmig ausgebildet sein. Insbesondere wenn bolzenförmige Kontaktelemente zum Einsatz kommen, kann dies der Fall sein. Prinzipiell ist es jedoch auch möglich andere Formen von Kontaktflächen, je nach Gestalt der Kontaktelemente, auszubilden. Wesentlich ist jedoch, dass die jeweilige Kontaktfläche immer kleiner als die kleinste beziehungsweise in Längsrichtung kürzeste Ladekontaktfläche ausgebildet ist.

Über die Leistungskontakte kann ein Strom von zumindest 1000A übertragen werden. Dies wird dann möglich, wenn zumindest vier Leistungskontakte ausgebildet sind. Sofern lediglich zwei Leistungskontakte ausgebildet sind, kann ein Strom von zumindest 500A aus übertragen werden.

Die Positioniervorrichtung kann einen Pantografen, eine Schwinge oder einen Teleskopmast umfassen, mittels der die Kontaktvorrichtung relativ zur Ladekontaktvorrichtung in Längsrichtung und/oder Querrichtung positioniert und in die Kontaktposition gebracht werden kann. Bei einer Schwinge kann ein ergänzendes Koppelgetriebe vorgesehen sein, welches die Kontaktvorrichtung relativ zur Ladekontaktvorrichtung oder umgekehrt stabilisiert beziehungsweise in der betreffenden Richtung ausrichtet. Demnach kann vorgesehen sein, die Kontaktvorrichtung oder die Ladekontaktvorrichtung an dem Pantographen oder der Schwinge anzuordnen. Weiter kann die Positioniervorrichtung an einem Fahrzeugdach oder beispielsweise an einem Mast einer Ladestation oder Haltestelle, Brücke oder Unterführung angeordnet sein. Ein Pantograph oder eine Schwinge beziehungsweise ein entsprechender mechanischer Antrieb ist besonders einfach und kostengünstig herstellbar

Besonders vorteilhaft ist es, wenn der Ladekontaktelementträger als eine in eine Fahrtrichtung des Fahrzeugs anordbare, dachförmige Längsschiene ausgebildet ist. Die Ladekontaktelemente können dann an einer Unterseite der dachförmigen Längsschiene angeordnet sein, so dass die Ladekontaktelemente nicht unmittelbar Witterungseinflüssen ausgesetzt sind. Auch kann die dachförmige Längsschiene vergleichsweise lang ausgebildet sein, so dass eine genaue Positionierung des Fahrzeugs an einer Haltestelle nicht mehr notwendig ist. Auch kann die dachförmige Längsschiene an ihren Enden vorzugsweise offen ausgebildet sein, so dass der Kontaktelementträger auch in Fahrtrichtung in die dachförmige Längsschiene eingeführt beziehungsweise herausgezogen werden kann. Wenn der Ladekontaktelementträger an einem Fahrzeug angeordnet werden soll, kann vorgesehen sein, den Ladekontaktelementträger als eine in einer Fahrtrichtungsfahrzeugs anordbare stegförmige Erhöhung auszubilden.

Die Kontaktvorrichtung kann auf einem Fahrzeugdach und die Ladekontaktvorrichtung an einer stationären Ladestation oder umgekehrt anordbar sein. Beispielsweise kann es sich dabei um ein Fahrzeugdach eines Elektrobusses oder auch eines Straßenbahnwagens handeln. Dabei kann beispielsweise auch vorgesehen sein, die Kontaktvorrichtung oder die Ladekontaktvorrichtung so auf dem Fahrzeugdach zu positionieren, dass diese in Fahrtrichtung auf einer Fahrerseite des Fahrzeugdaches angeordnet ist. Einem Fahrer des Fahrzeuges wird so eine Positionierung der Kontaktvorrichtung beziehungsweise der Ladekontaktvorrichtung wesentlich vereinfacht, da diese beziehungsweise deren Lage in Blickrichtung des Fahrers liegt.

Der Ladekontaktelementträger kann eine Aufnahmeöffnung für den Kontaktelementträger ausbilden, wobei der Kontaktelementträger in die Aufnahmeöffnung des Ladekontaktelementträgers eingesetzt werden kann, oder der Kontaktelementträger kann eine Aufnahmeöffnung für den Ladekontaktelementträger ausbilden, wobei der Ladekontaktelementträger in die Aufnahmeöffnung des Kontaktelementträgers eingesetzt werden kann. Dabei kann die Aufnahmeöffnung vorzugsweise V-förmig ausgebildet sein. Bei einer Relativabweichung des Kontaktelementträgers bei einem Zusammenführen von Kontaktvorrichtung und Ladekontaktvorrichtung zur Aufnahmeöffnung bewirkt dann die V-förmige Ausbildung der Aufnahmeöffnung eine Zentrierung des Kontaktelementträgers beziehungsweise des Ladekontaktelementträgers. Umgekehrt kann der Kontaktelementträger eine Aufnahmeöffnung für den Ladekontaktelementträger ausbilden, wobei der Ladekontaktelementträger dann in die Aufnahmeöffnung des Kontaktelementträgers einsetzbar sein kann. Die Aufnahmeöffnung kann dann auch hier vorzugsweise V-förmig ausgebildet sein, wobei dann innerhalb der V-förmigen Aufnahmeöffnung die Kontaktelemente angeordnet sein können. Die Aufnahmeöffnung kann bei einem Zusammenführen von Kontaktelementträger und Ladekontaktelementträger eine Führung für den Kontaktelementträger oder den Ladekontaktelementträger ausbilden. Eventuelle Lageabweichungen des Fahrzeugs bei einem Halt an einer Haltestelle von einer vorgesehenen Halteposition können so durch die durch die Aufnahmeöffnung bewirkte Führung des Kontaktelementträgers beziehungsweise des Ladekontaktelementträgers in die Kontaktposition leicht ausgeglichen werden.

Weiter kann eine Führungsvorrichtung bei einem Zusammenführen von Kontaktvorrichtung und Ladekontaktvorrichtung die jeweiligen Hochachsen einer gemeinsamen Flucht positionieren. Das heißt, wenn die Hochachsen der Kontaktvorrichtung und der Ladekontaktvorrichtung nicht fluchtend relativ zueinander angeordnet sind, kann der Berührungskontakt auch nicht hergestellt werden. Erst wenn die Führungsvorrichtung die Kontaktvorrichtung und die Ladekontaktvorrichtung relativ zueinander so positioniert beziehungsweise ausgerichtet hat, dass die jeweiligen Hochachsen fluchten beziehungsweise in einer gemeinsamen Flucht liegen, kann der Berührungskontakt hergestellt werden. Vorteilhaft ist es daher, wenn das Schnellladesystem die Führungsvorrichtung zur Führung der Kontaktvorrichtung oder der Ladekontaktvorrichtung in die Kontaktposition aufweist, wobei die Führungsvorrichtung so ausgebildet sein kann, dass bei einer Zusammenführung von Kontaktvorrichtung und Ladekontaktvorrichtung ein Berührungskontakt der Kontaktelemente mit den Ladekontaktelementen vor einem Erreichen der Kontaktposition unterbunden wird. Mittels der Führungsvorrichtung kann dann folglich verhindert werden, dass bei einem Zusammenführen von Kontaktvorrichtung und Ladekontaktvorrichtung der Berührungskontakt der Kontaktelemente mit der Ladekontaktvorrichtung vor dem Erreichen der Kontaktposition überhaupt möglich ist. Der Berührungskontakt kann dann erst in der Kontaktposition ausgebildet beziehungsweise hergestellt werden. Die Kontaktelemente können nicht über größere Strecken an der Ladekontaktvorrichtung beziehungsweise deren Oberfläche entlang gleiten, wodurch ein unerwünschter Abrieb der Kontaktelemente beziehungsweise der Oberfläche der Ladekontaktvorrichtung vermieden wird.

Die erfindungsgemäße Ladeinfrastruktur umfasst zumindest zwei Schnellladesysteme, wobei zumindest ein Schnellladesystem ein erfindungsgemäßes Schnellladesystem ist. Demnach kann zumindest eines der Schnellladesysteme zumindest vier Ladekontaktelemente und/oder vier Kontaktelemente aufweisen, wobei die Ladekontaktelemente relativ zu den Kontaktelementen derart angeordnet sind, dass in der Kontaktposition zumindest zwei Leistungskontakte zwischen zwei Ladekontaktelementen und zwei Kontaktelementen ausbildbar sind. Bei den zumindest zwei Schnellladesystemen kann es sich auch um erfindungsgemäße Schnellladesysteme handeln, so dass jedes der Schnellladesysteme zumindest vier Ladekontaktelemente und/oder vier Kontaktelemente aufweist. In einer besonders vorteilhaften Ausführungsform kann die Ladeinfrastruktur zumindest zwei erfindungsgemäße Schnellladesysteme mit jeweils zumindest vier Ladekontaktelementen und zumindest vier Kontaktelementen zur jeweils Ausbildung von zumindest vier Ladekontakten umfassen. Weitere vorteilhafte Ausführungsformen einer Ladeinfrastruktur ergeben sich aus den Merkmalsbeschreibungen der auf den Anspruch 1 rückbezogenen Unteransprüche.

Bei dem erfindungsgemäßen Verfahren zur Ausbildung einer elektrisch leitenden Verbindung zwischen einem Fahrzeug und einer stationären Ladestation, insbesondere für ein Schnellladesystem für elektrisch angetriebene Fahrzeuge, wie Elektrobusse oder dergleichen, umfasst das Schnellladesystem eine Kontaktvorrichtung, eine Ladekontaktvorrichtung und eine Positioniervorrichtung, wobei mit der Kontaktvorrichtung die Ladekontaktvorrichtung in einer Kontaktposition elektrisch kontaktiert wird, wobei mittels der Positioniervorrichtung die Kontaktvorrichtung relativ zur Ladekontaktvorrichtung positioniert und in die Kontaktposition gebracht wird, wobei die Ladekontaktvorrichtung einen Ladekontaktelementträger mit Ladekontaktelementen aufweist, wobei die Ladekontaktelemente jeweils streifenförmig ausgebildet sind, wobei die Kontaktvorrichtung einen Kontaktelementträger mit Kontaktelementen aufweist, wobei die Kontaktelemente in der Kontaktposition mit den Ladekontaktelementen jeweils zur Ausbildung von Kontaktpaarungen elektrisch kontaktiert werden, wobei die Kontaktpaarungen für zumindest zwei Leistungskontakte des Schnellladesystems ausgebildet werden, wobei der Ladekontaktelementträger zumindest vier Ladekontaktelemente und/oder wobei der Kontaktelementträger zumindest vier Kontaktelemente aufweist, wobei die Ladekontaktelemente relativ zu den Kontaktelementen derart angeordnet sind, dass in der Kontaktposition zumindest zwei Leistungskontakte zwischen zwei Ladekontaktelementen und zwei Kontaktelementen ausgebildet werden. Hinsichtlich der vorteilhaften Wirkungen des erfindungsgemäßen Verfahrens wird auf die Vorteilsbeschreibung des erfindungsgemäßen Schnellladesystems verwiesen. Weitere vorteilhafte Ausführungsformen des Verfahrens ergeben sich aus den Merkmalsbeschreibungen der auf den Anspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine Ausführungsform eines Schnellladesystems in einer Seitenansicht;
- **Fig. 2**: eine Ausführungsform eines Schnellladesystems nach dem Stand der Technik in einer Vorderansicht;
- **Fig. 3**: eine Ausführungsform eines Schnellladesystems in einer Vorderansicht;
- **Fig. 4**: eine weitere Ausführungsform eines Schnellladesystems in einer Vorderansicht;
- **Fig. 5**: das Schnellladesystem aus **Fig. 4** in einer Kontaktposition;
- **Fig. 6**: eine erste Ausführungsform einer Kontaktvorrichtung und einer Ladekontaktvorrichtung eines Schnellladesystems in einer schematischen Draufsicht;
- **Fig. 7**: eine zweite Ausführungsform einer Kontaktvorrichtung und einer Ladekontaktvorrichtung eines Schnellladesystems in einer schematischen Draufsicht;
- **Fig. 8**: eine dritte Ausführungsform einer Kontaktvorrichtung und einer Ladekontaktvorrichtung eines Schnellladesystems in einer schematischen Draufsicht;
- **Fig. 9**: eine vierte Ausführungsform einer Kontaktvorrichtung und einer Ladekontaktvorrichtung eines Schnellladesystems in einer schematischen Draufsicht.

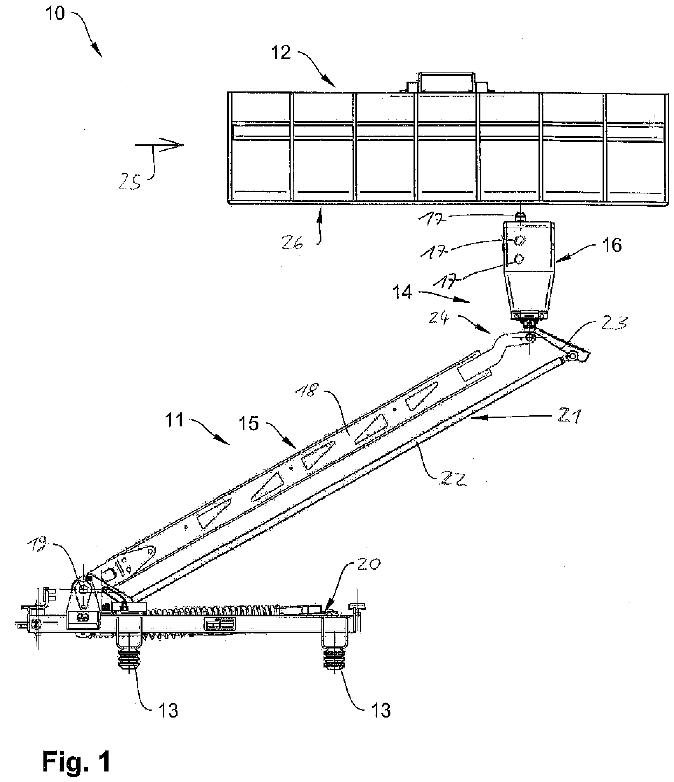

Die **Fig. 1** zeigt ein Schnellladesystem 10, gebildet aus einer Kontaktvorrichtung 11 und einer Ladekontaktvorrichtung 12. Die Kontaktvorrichtung 11 ist über elektrisch isolierte Füße 13 auf einem Dach eines hier nicht näher dargestellten Fahrzeugs beziehungsweise Elektrobusses befestigt. Die Ladekontaktvorrichtung 12 ist mittels einer hier nicht näher dargestellten Aufhängvorrichtung oberhalb des Elektrobusses im Bereich einer Halterstelle des Elektrobusses aufgehängt. Die Kontaktvorrichtung 11 umfasst einen Kontaktelementträger 14, mit dem die Ladekontaktvorrichtung 12 kontaktierbar ist. Weiter umfasst das Schnellladesystem 10 eine Positioniervorrichtung 15, mit der der Kontaktelementträger 14 relativ zur Ladekontaktvorrichtung 12 positioniert werden kann.

Der Kontaktelementträger 14 umfasst weiter einen Korpus 16 mit Kontaktelementen 17, die mit hier nicht ersichtlichen Ladekontaktelementen der Ladekontaktvorrichtung 12 kontaktiert werden können. Die Positioniervorrichtung 15 weist in der hier gezeigten Ausführungsform eine Schwinge 18 auf, welche über ein Drehlager 19 an einem Befestigungsrahmen 20 der Kontaktvorrichtung 11 verschwenkt werden kann. Weiter ist ein Koppelgetriebe 21 der Positioniervorrichtung 15 vorgesehen, bei dem ein Stab 22 des Koppelgetriebes 21 an einem Hebel 23 an dem Korpus 16 angeschlossen ist. Bei einem Verschwenken der Schwinge 18 wird über das Koppelgetriebe 21 wird der an einem oberen Ende 24 der Schwinge 18 angeordnete Korpus 16 über das Koppelgetriebe 21 stets in einer im Wesentlichen horizontalen Lage gehalten. Folglich wird der Kontaktelementträger 14 in Richtung einer hier mit dem Pfeil 25 angedeuteten Fahrtrichtung des Elektrobusses in einen dachförmigen Ladekontaktelementträger 26 der Ladekontaktvorrichtung 12 bei einer Zusammenführung in die Kontaktposition eingeführt.

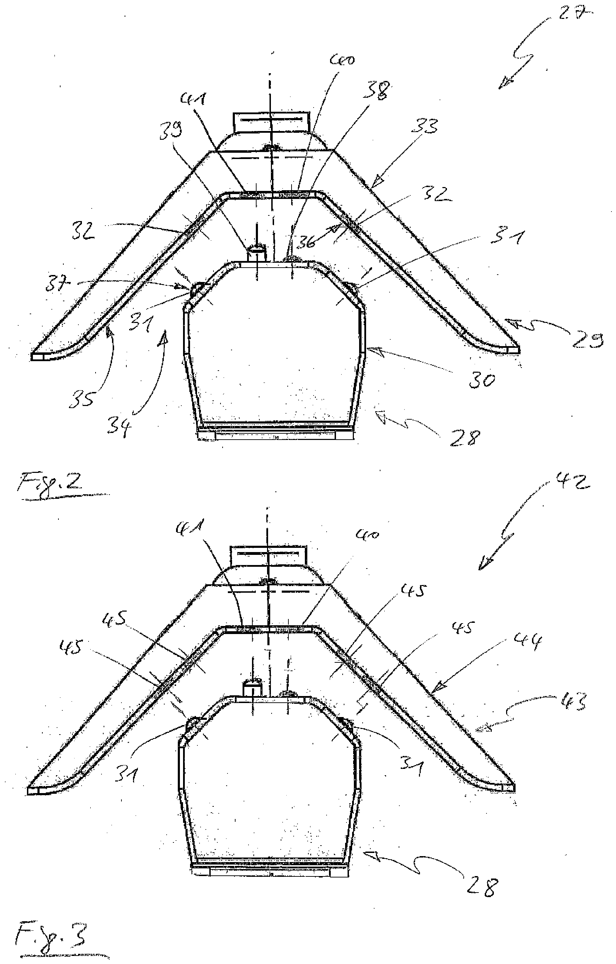

Die **Fig. 2** zeigt eine abschnittsweise Darstellung eines Schnellladesystems 27 nach dem Stand der Technik mit einer Kontaktvorrichtung 28 und einer Ladekontaktvorrichtung 29. Die Kontaktvorrichtung 28 und die Ladekontaktvorrichtung 29 sind hier in Art der Kontaktvorrichtung beziehungsweise Ladekontaktvorrichtung des Schnellladesystems nach der **Fig. 1** ausgebildet. Ein Kontaktelementträger 30 weist die Kontaktelemente 31 zur Ausbildung von Leistungskontakten mit Ladekontaktelementen 32 an einem Ladekontaktelementträger 33 der Ladekontaktvorrichtung 29 auf. Der Ladekontaktelementträger 33 ist hier dachförmig ausgebildet und weist eine V-förmige Aufnahmeöffnung 34 für den Kontaktelementträger 30 auf. An einer Innenseite 35 der Aufnahmeöffnung 34 verlaufen die Kontaktelemente 32, die hier als Leiterstreifen 36 ausgebildet sind, entlang einer hier nicht dargestellten Längsachse der Ladekontaktvorrichtung 29. Die Kontaktelemente 31 sind als Bolzen 37 ausgebildet und gelangen in einer hier nicht dargestellten Kontaktposition an die Lagekontaktelemente 33, so dass Kontaktpaarungen ausgebildet werden.

Weiter sind an dem Kontaktelementträger 30 Kontaktelemente 38 und 39 sowie an dem Ladekontaktelementträger 33 Ladekontaktelemente 40 und 41 angeordnet, mittels derer ein Signalkontakt und ein Schutzkontakt in der Kontaktposition ausgebildet werden kann. Bei dem Schnellladesystem 27 sind jeweils zwei Kontaktelemente 31 und zwei Ladekontaktelemente 32 zur Ausbildung von Leistungskontakten vorgesehen.

Die **Fig. 3** zeigt eine Ausführungsform eines Schnellladesystems 42, bei dem im Unterschied zum Schnellladesystem aus **Fig. 2** eine Ladekontaktvorrichtung 43 mit einem Ladekontaktelementträger 44 mit vier Ladekontaktelementen 45 zur Ausbildung von Leistungskontakten vorgesehen sind. Die Ladekontaktelemente 45 verlaufen hier relativ zueinander parallel in Richtung einer hier nicht dargestellten Längsachse des Ladekontaktelementträgers 44. Neben den Ladekontaktelementen 40 und 41, die auch hier zur Ausbildung eines Signalkontaktes und eines Schutzkontaktes dienen, sind vier Ladekontaktelemente 45 zur Ausbildung von vier Leistungskontakten vorhanden. Wenn die Kontaktvorrichtung 28 in die Kontaktposition gebracht ist, werden jedoch nur zwei Leistungskontakte ausgebildet. Die Ladekontaktvorrichtung 43 ist demnach mit der aus dem Stand der Technik bekannten Kontaktvorrichtung 28 aus **Fig. 2** kompatibel.

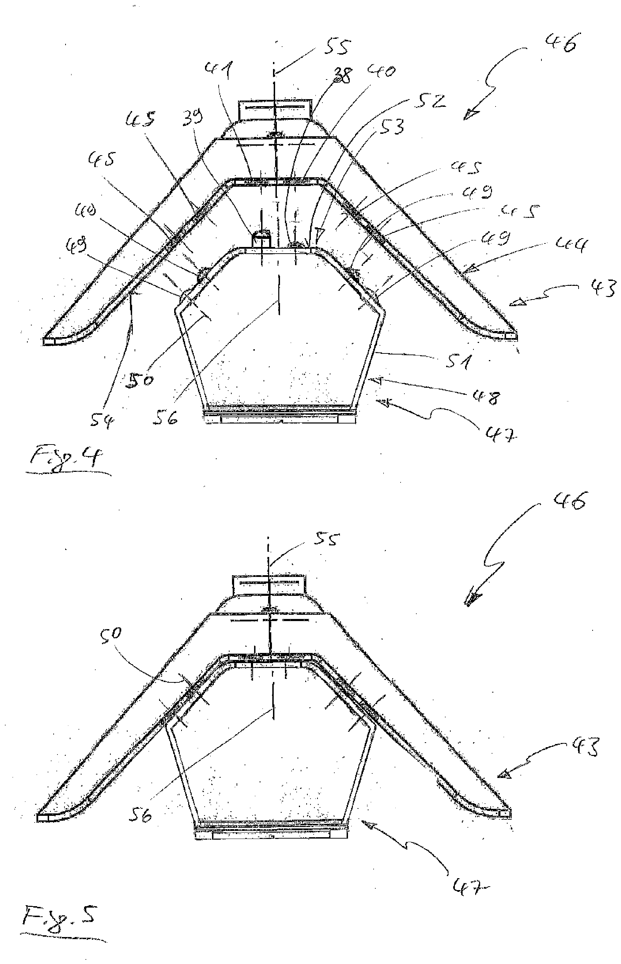

Die **Fig. 4** und **5** zeigen ein Schnellladesystem 46, umfassend die Ladekontaktvorrichtung 43 aus **Fig. 3** und eine Kontaktvorrichtung 47. Die Kontaktvorrichtung 47 weist einen Kontaktelementträger 48 mit Kontaktelementen 38 und 39 zur Ausbildung eines Signalkontakts beziehungsweise Schutzkontakts, und im Unterschied zum Kontaktelementträger aus **Fig. 2****,** vier Kontaktelemente 49 zur Ausbildung von Leistungskontakten mit den Ladekontaktelementen 45 auf. Die **Fig. 5** zeigt die Ladekontaktvorrichtung 43 zusammen mit der Kontaktvorrichtung 47 in einer Kontaktposition, in der die Kontaktelemente 49 mit den Ladekontaktelementen 45 kontaktiert sind. Die Kontaktelemente 38, 39 und 49 sind mit einer Federkraft beaufschlagt und im Wesentlichen in Richtung einer Längsachse 50 entgegen der Federkraft bewegbar, derart, dass in der Kontaktposition die Kontaktelemente 38, 39 und 49 in einen Korpus 51 des Kontaktelementträgers 48 hinein verlagert sind. Eine Oberfläche 52 einer Kontaktseite 53 des Kontaktelementträgers 48 gelangt dabei zumindest teilweise an einer Oberfläche 54 des Ladekontaktelementträgers zur Anlage. Weiter ist in der Kontaktposition die Kontaktvorrichtung 47 relativ zu der Ladekontaktvorrichtung 43 so positioniert, dass eine Hochachse 55 der Kontaktvorrichtung 47 beziehungsweise des Kontaktelementträgers 48 im Wesentlichen mit einer Hochachse 56 der Ladekontaktvorrichtung 43 beziehungsweise des Ladekontaktelementträgers 44 fluchtet.

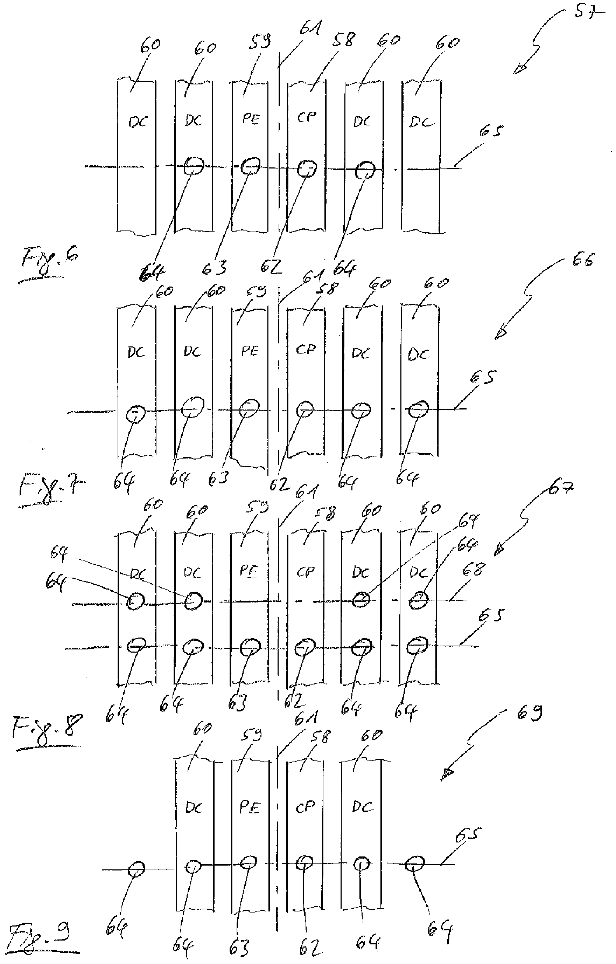

Die **Fig. 6** zeigt eine schematische Teildarstellung einer Ausführungsform eines Schnellladesystems 57, welches in Art des Schnellladesystems aus **Fig. 1** ausgebildet ist. Ladekontaktelemente 58, 59 und 60 verlaufen hier entlang einer Längsachse 61 eines hier nicht dargestellten Ladekontaktelementträgers parallel. Das Ladekontaktelement 58 dient zur Ausbildung eines Signalkontaktes mit einem Kontaktelement 62 an einem hier nicht dargestellten Kontaktelementträger, das Ladekontaktelement 59 dient zur Ausbildung eines Schutzkontaktes mit einem Kontaktelement 63 und die Ladekontaktelemente 60 dienen zur Ausbildung von Leistungskontakten mit Kontaktelementen 64. Insgesamt sind hier vier Ladekontaktelemente 60 vorhanden, wobei lediglich zwei Kontaktelemente 64 zur Verfügung stehen. Sämtliche Kontaktelemente 62, 63 und 64 sind in einer Ebene 65 angeordnet, die in der Kontaktposition orthogonal zu der Längsachse 61 des Ladekontaktelementträgers verläuft.

Die **Fig. 7** zeigt ein Schnellladesystem 66, bei dem im Unterschied zum Schnellladesystem aus **Fig. 6** zwei weitere Kontaktelemente 64 vorhanden sind. So können dann insgesamt vier Leistungskontakte zwischen den Ladekontaktelementen 60 und den Kontaktelementen 64 ausgebildet werden.

Die **Fig. 8** zeigt ein Schnellladesystem 67, bei dem im Unterschied zum Schnellladesystem aus **Fig. 7** vier weitere Kontaktelemente 64 vorgesehen sind. Diese Kontaktelemente 64 sind in einer weiteren Ebene 68 angeordnet, die in der Kontaktposition orthogonal zu der Längsachse 61 verläuft. Die Ebene 65 ist dabei in Richtung der Längsachse 61 von der weiteren Ebene 68 beabstandet. Insgesamt sind so den Ladekontaktelementen 60 jeweils zwei Kontaktelemente 64 zugeordnet, so dass in der Kontaktposition acht Leistungskontakte ausgebildet werden können.

Die **Fig. 9** zeigt ein Schnellladesystem 69, bei dem im Unterschied zum Schnellladesystem aus **Fig. 7** lediglich zwei Ladekontakte 60 vorgesehen sind. Die Ladekontaktelemente 60 sind jeweils mit einem Kontaktelement 64 kontaktiert, wobei zwei weitere Kontaktelemente 64 ungenutzt sind.

## Patentansprüche

1. Schnellladesystem (10, 42, 46, 57, 66, 67, 69) für elektrisch angetriebene Fahrzeuge, insbesondere Elektrobusse oder dergleichen, zur Ausbildung einer elektrisch leitenden Verbindung zwischen einem Fahrzeug und einer stationären Ladestation, mit einer Kontaktvorrichtung (11, 47), einer Ladekontaktvorrichtung (12, 43) und einer Positioniervorrichtung (15), wobei die Kontaktvorrichtung oder die Ladekontaktvorrichtung an einem Fahrzeug anordbar ist, wobei die Kontaktvorrichtung mit der Ladekontaktvorrichtung in einer Kontaktposition elektrisch kontaktierbar ist, wobei mittels der Positioniervorrichtung die Kontaktvorrichtung relativ zur Ladekontaktvorrichtung positionierbar und in die Kontaktposition bringbar ist, wobei die Ladekontaktvorrichtung einen Ladekontaktelementträger (26, 44) mit Ladekontaktelementen (40, 41, 45, 58, 59, 60) aufweist, wobei die Ladekontaktelemente jeweils streifenförmig ausgebildet sind, wobei die Kontaktvorrichtung einen Kontaktelementträger (14, 48) mit Kontaktelementen (17, 31, 38, 39, 49, 62, 63, 64) aufweist, wobei die Kontaktelemente in der Kontaktposition mit den Ladekontaktelementen jeweils zur Ausbildung von Kontaktpaarungen elektrisch kontaktierbar sind, wobei die Kontaktpaarungen für zumindest zwei Leistungskontakte des Schnelladesystems ausbildbar sind,
**dadurch gekennzeichnet,**
**dass** der Ladekontaktelementträger zumindest vier Ladekontaktelemente und/oder dass der Kontaktelementträger zumindest vier Kontaktelemente aufweist, wobei die Ladekontaktelemente relativ zu den Kontaktelementen derart angeordnet sind, dass in der Kontaktposition zumindest zwei Leistungskontakte zwischen zwei Ladekontaktelementen (45, 60) und zwei Kontaktelementen (17, 31, 49, 64) ausbildbar sind.

2. Schnellladesystem nach Anspruch 1,
**dadurch gekennzeichnet,**
**dass** zwei Leistungskontakte mit alleine zwei Kontaktelementen (17, 31, 64) ausbildbar sind.

3. Schnellladesystem nach Anspruch 1 oder 2,
**dadurch gekennzeichnet,**
**dass** in der Kontaktposition eine Ausbildung von zumindest zwei weiteren Leistungskontakten oder eine Kontaktierung von zumindest zwei Kontaktelementen (17, 31, 64) unterbleibt.

4. Schnellladesystem nach Anspruch 1 oder 2,
**dadurch gekennzeichnet,**
**dass** in der Kontaktposition zumindest vier Leistungskontakte zwischen vier Ladekontaktelementen (45, 60) und vier Kontaktelementen (17, 49, 64) ausbildbar sind.

5. Schnellladesystem nach Anspruch 4,
**dadurch gekennzeichnet,**
**dass** der Kontaktelementträger (14, 48) mehr als vier Kontaktelemente (64) aufweist, wobei zumindest zwei Kontaktelemente (64) entlang zumindest eines Ladekontaktelements (60) mit diesem kontaktierbar sind.

6. Schnellladesystem nach einem der vorangehenden Ansprüche,
**dadurch gekennzeichnet,**
**dass** die Ladekontaktelemente (40, 41, 45, 58, 59, 60) als Leiterstreifen (36) ausgebildet sind, wobei die Leiterstreifen relativ zueinander parallel und in Richtung einer Längsachse (61) des Ladekontaktelementträgers (26, 44) angeordnet sind.

7. Schnellladesystem nach einem der vorangehenden Ansprüche,
**dadurch gekennzeichnet,**
**dass** die Kontaktelemente (17, 31, 38, 39, 49, 62, 63, 64) in einer Ebene (65) angeordnet sind, die in der Kontaktposition orthogonal zu einer Längsachse (61) des Ladekontaktelementträgers (26, 44) verläuft.

8. Schnellladesystem nach Anspruch 7,
**dadurch gekennzeichnet,**
**dass** die Kontaktelemente (64) in zumindest einer weiteren Ebene (68) angeordnet sind, die in der Kontaktposition orthogonal zu der Längsachse (61) verläuft, wobei die Ebenen (65, 68) in Richtung der Längsachse voneinander beabstandet sind.

9. Schnellladesystem nach einem der vorangehenden Ansprüche,
**dadurch gekennzeichnet,**
**dass** die Kontaktpaarungen für jeweils Leistungskontakte, einen Signalkontakt und/oder einen Schutzkontakt des Schnelladesystems (10, 42, 46, 57, 66, 67, 69) ausbildbar sind.

10. Schnellladesystem nach einem der vorangehenden Ansprüche,
**dadurch gekennzeichnet,**
**dass** die Kontaktelemente (17, 31, 38, 39, 49, 62, 63, 64) jeweils eine Kontaktfläche und die Ladekontaktelemente (40, 41, 45, 58, 59, 60) jeweils eine Ladekontaktfläche ausbilden, wobei die die Kontaktflächen jeweils kleiner als die Ladekontaktflächen ausgebildet sind.

11. Schnellladesystem nach einem der vorangehenden Ansprüche,
**dadurch gekennzeichnet,**
**dass** über die Leistungskontakte in Strom von zumindest 1000 A übertragbar ist.

12. Schnellladesystem nach einem der vorangehenden Ansprüche,
**dadurch gekennzeichnet,**
**dass** die Positioniervorrichtung (15) einen Pantografen, eine Schwinge (18) oder einen Teleskopmast umfasst, mittels der die Kontaktvorrichtung (11, 47) relativ zur Ladekontaktvorrichtung (12, 43) in Längsrichtung und/oder Querrichtung positionierbar und in die Kontaktposition bringbar ist.

13. Schnellladesystem nach einem der vorangehenden Ansprüche,
**dadurch gekennzeichnet,**
**dass** der Ladekontaktelementträger (26, 44) als eine in einer Fahrtrichtung (25) des Fahrzeuges anordbare, dachförmige Längsschiene ausgebildet ist.

14. Schnellladesystem nach einem der vorangehenden Ansprüche,
**dadurch gekennzeichnet,**
**dass** die Kontaktvorrichtung (11, 47) auf einem Fahrzeugdach und die Ladekontaktvorrichtung (12, 43) an einer stationären Ladestation oder die Ladekontaktvorrichtung auf einem Fahrzeugdach und die Kontaktvorrichtung an einer stationären Ladestation anordbar ist.

15. Schnellladesystem nach einem der vorangehenden Ansprüche,
**dadurch gekennzeichnet,**
**dass** der Ladekontaktelementträger (26, 44) eine Aufnahmeöffnung (34) für den Kontaktelementträger (14, 48) ausbildet, wobei der Kontaktelementträger in die Aufnahmeöffnung des Ladekontaktelementträgers einsetzbar ist oder der Kontaktelementträger eine Aufnahmeöffnung für den Ladekontaktelementträger ausbildet, wobei der Ladekontaktelementträger in die Aufnahmeöffnung des Kontaktelementträgers einsetzbar ist.

16. Ladeinfrastruktur, umfassend zumindest zwei Schnellladesysteme (10, 42, 46, 57, 66, 67, 69), wobei zumindest ein Schnellladesystem ein Schnellladesystem (10,42,46, 57, 66, 67, 69) nach einem der vorangehenden Ansprüche ist.

17. Verfahren zur Ausbildung einer elektrisch leitenden Verbindung zwischen einem Fahrzeug und einer stationären Ladestation, insbesondere für ein Schnellladesystem (10, 42, 46, 57, 66, 67, 69) für elektrisch angetriebene Fahrzeuge, wie Elektrobusse oder dergleichen, mit einer Kontaktvorrichtung (11, 47), einer Ladekontaktvorrichtung (12, 43) und einer Positioniervorrichtung (15), wobei mit der Kontaktvorrichtung die Ladekontaktvorrichtung in einer Kontaktposition elektrisch kontaktiert wird, wobei mittels der Positioniervorrichtung die Kontaktvorrichtung relativ zur Ladekontaktvorrichtung positioniert und in die Kontaktposition gebracht wird, wobei die Ladekontaktvorrichtung einen Ladekontaktelementträger (26, 44) mit Ladekontaktelementen (40, 41, 45, 58, 59, 60) aufweist, wobei die Ladekontaktelemente jeweils streifenförmige ausgebildet sind, wobei die Kontaktvorrichtung einen Kontaktelementträger (14, 48) mit Kontaktelementen (17, 31, 38, 39, 49, 62, 63, 64) aufweist, wobei die Kontaktelemente in der Kontaktposition mit den Ladekontaktelementen jeweils zur Ausbildung von Kontaktpaarungen elektrisch kontaktiert werden, wobei die Kontaktpaarungen für zumindest zwei Leistungskontakte des Schnelladesystems ausgebildet werden,
**dadurch gekennzeichnet,**
**dass** der Ladekontaktelementträger zumindest vier Ladekontaktelemente und/oder dass der Kontaktelementträger zumindest vier Kontaktelemente aufweist, wobei die Ladekontaktelemente relativ zu den Kontaktelementen derart angeordnet sind, dass in der Kontaktposition zumindest zwei Leistungskontakte zwischen zwei Ladekontaktelementen (45, 60) und zwei Kontaktelementen (17, 31, 49, 64) ausgebildet werden.
